# EUROPEAN PATENT APPLICATION

(11) **EP 4 822 923 A1**
(43) Date of publication of application: **14.10.2026**
(21) Application number: 26171973.6
(22) Date of filing: 13.04.2026
(51) Int. Cl.: H02G 3/04, H02G 3/06

(54) **TRAY CLIP FOR STRUT**

(30) Priority: 11.04.2025 US 202563787105 P; 11.02.2026 US 202663980589 P
(71) Applicant: Erico International Corporation, Solon, OH 44139 (US)
(72) Inventor: Anderson, Scott Ernest, Garrettsville (US)
(74) Representative: Barker Brettell LLP

(57) **Abstract**

A strut clip (100) to secure a tray can include a clip body (104) and a fastener (184). The clip body (104) can include a first plate (140), a second plate (110), and an arm (172). The first plate (140) can include a first aperture (150) and an engagement feature (158). The second plate (110) can include a second aperture (114) and opposed fingers (126a, 126b). The arm (172) can extend between the first plate (140) and the second plate (110). The fastener (184) can be secured through the first aperture (150) and the second aperture (114). The fastener (184) can be movable relative to the first or second plate (140, 110) to deform the arm (172) and thereby decrease a distance between the first and second plates (140, 110).

## Description

### CROSS-REFERENCE TO RELATED APPLICATIONS

This application claims priority to U.S. Provisional Patent Application No. 63/980,589, filed February 11, 2026, and U.S. Provisional Patent Application No. 63/787,105, filed April 11, 2025.

### BACKGROUND

Tray clips for strut can be used to attach (e.g., couple, install) cable ladder trays (e.g., cable trays, ladder trays, conduit trays) to struts (e.g., mounting structure, support, strut support). In some installations, tray clips for strut may need to be installed in large quantities for a variety of different applications, including solar fields, industrial applications, and more.

### SUMMARY

Some aspects of the disclosure can provide a strut clip to secure a tray to a strut that includes lip channels and a top opening. The strut clip can include a clip body and a fastener. The clip body can include a first plate, a second plate, and an arm that can be connected to and extending between the first plate and the second plate. The first plate can include a first aperture and an engagement feature. The second plate can include a second aperture and opposed fingers that can extend from the second plate toward the first plate. The fastener can be movable relative to the first and second plates to decrease a distance between the first and second plates by deforming the arm, and thereby to move the lip body from an installation orientation, with the arm in an undeformed orientation, to an installed orientation, with the arm in a deformed orientation, to capture the tray between the engagement feature and the strut, with the arm extending through the top opening of the strut and the opposed fingers secured within the lip channels of the strut.

In some examples, the arm can be concave relative to a space between the first and second plates, so as to deform outwardly away from the space between the first and second plates to move from the undeformed orientation to the deformed orientation.

In some examples, the opposed fingers can include a first opposed finger and a second opposed finger. The strut clip may define a reference axis configured to extend in parallel with an elongate direction of the strut. The first opposed finger can extend laterally in a first direction relative to the reference axis. The second opposed finger can extend laterally in a second direction relative to the reference axis. The first opposed finger can be offset from the second opposed finger along the reference axis.

In some examples, the engagement feature can include an engagement tab that extends away from the second plate.

In some examples, the clip body can include alignment fingers extending from the first plate, opposite the engagement feature. The alignment fingers can be oriented to be received into the top opening of the struct in the installed orientation to align the strut clip relative to the strut.

In some examples, the fastener can extend through the first aperture and can be threadedly engaged with the second aperture.

Some aspects of the disclosure can provide method of attaching a clip to strut to secure a tray. The method can include providing a strut clip that includes a clip body and a fastener, the clip body including a first plate, the first plate including a first aperture and an engagement feature, a second plate, the second plate including a second aperture and opposed fingers that extend from the second plate toward the first plate, and an arm connected to and extending between the first plate and second plate, and the fastener being secured through the first aperture and the second aperture. The method can also include aligning the opposed fingers of the clip with lip channels of the strut, aligning the tray between the engagement feature of the clip and the strut, and adjusting the fastener to decrease a distance between the first and second plates by deforming the arm, and thereby to move the clip body from an installation orientation, with the arm in an undeformed orientation, to an installed orientation, with the arm in a deformed orientation, to capture the tray between the engagement feature and the strut, with the arm extending through a top opening of the strut and the opposed fingers secured within the lip channels of the strut.

In some examples, adjusting the fasteners to deform the arm, to decrease the distance between the first and second plates, can include deforming the arm outwardly away from a space between the first and second plates.

In some examples, the opposed fingers can include a first opposed finger and a second opposed finger. The strut clip can define a reference axis that extends in parallel with an elongate direction of the strut in the installed orientation. The first opposed finger can extend laterally in a first direction relative to the reference axis. The second opposed finger can extend laterally in a second direction relative to the reference axis. The first opposed finger can be offset from the second opposed finger along the reference axis;. Aligning the opposed fingers with the lip channels can include inserting the opposed fingers through the top opening of the strut.

In some examples, the fastener can be rotated to deform the arm. In some examples, the fastener can be threadedly engaged with the second plate.

Some aspects of the disclosure can provide a strut clip to secure a tray. The strut clip can include a clip body and a fastener. The clip body can include a first plate, a second plate, and an arm that can extend between the first plate and second plate. The first plate can include a first aperture and an engagement feature. The second plate can include a second aperture and opposed fingers. The fastener can be secured through the first aperture and the second aperture. The fastener can be movable relative to the first and second plates to deform the arm and thereby decrease a distance between the first and second plates.

In some examples, the first aperture can extend through a protrusion of the first plate.

In some examples, the engagement feature can be configured to engage one or more of a ladder tray or a wire cable tray.

In some examples, the opposed fingers can extend laterally outwardly relative to a reference axis that is perpendicular to an axis of the fastener, and can be offset from each other along the reference axis. In some examples, the opposed fingers can further extend toward the first plate, to be oriented to engage interior surfaces of lip channels of a strut, with the arm extending through a top opening of the strut and the first plate oriented outside of a channel of the strut.

In some examples, in an installation orientation, the arm can extend with a concave profile relative to a space between the first and second plates.

In some examples, wherein the first plate can include alignment fingers, opposite the engagement feature, to engage lip profiles of a strut engaged by the strut clip.

In some examples, wherein the clip body can integrally include the first plate, the second plate, and the arm. In some examples, wherein the second plate can integrally include a threaded profile that engages the fastener.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the strut clip, system or any feature(s) or component(s) described may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosed technology and, together with the description, serve to explain the principles of examples of the disclosed technology:
FIG. 1 illustrates a strut clip, according to some aspects of the disclosure;
FIG. 2 illustrates another view of the strut clip of FIG. 1;
FIG. 3 illustrates a support structure for attachment with a strut clip, according to some aspects of the disclosure;
FIGS. 4A-4D illustrate installation of the strut clip of FIG. 1 onto a support structure;
FIG. 4E illustrates an alternative configuration of an arm of the strut clip of FIG. 1;
FIG. 4F illustrates a detail view of an installed configuration of the strut clip of FIG. 1;
FIG. 5A illustrates the strut clip of FIG. 1 in an installed configuration to secure example objects to the support structure;
FIG. 5B shows the strut clip in the installed configuration with the support structure rendered transparently;
FIG. 6 illustrates another configuration of the strut clip of FIG. 1, according to some aspects of the disclosure;
FIG. 7 illustrates another view of the strut clip of FIG. 6;
FIG. 8 illustrates another configuration of the strut clip of FIG. 1, according to some aspects of the disclosure;
FIG. 9 illustrates another view of the strut clip of FIG. 8;
FIG. 10A and 10B illustrate the strut clip of FIG. 8 installed on a support structure and securing a component, with the support structure rendered transparently in FIG. 10B;
FIG. 11 illustrates another configuration of the strut clip of FIG. 1, according to some aspects of the disclosure;
FIG. 12 illustrates the strut clip of FIG. 11 securing a component; and
FIG. 13 illustrates the strut clip of FIG. 11 installed on a support structure and securing a component.

### DETAILED DESCRIPTION

Before any examples of the disclosed technology are explained in detail, it is to be understood that the disclosure is not limited in its application to the details of construction and the arrangement of components set forth in the following description or illustrated in the following drawings. The disclosure is capable of other examples and of being practiced or of being carried out in various ways.

The following discussion is presented to enable a person skilled in the art to make and use examples of the disclosed technology. Various modifications to the illustrated examples will be readily apparent to those skilled in the art, and the generic principles herein can be applied to other examples and applications without departing from the disclosed technology. Thus, the disclosed technology is not intended to be limited to examples shown, but are to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of disclosed technology. Skilled artisans will recognize the examples provided herein have many useful alternatives and fall within the scope of the disclosed technology.

In various installations, cable trays, conduit, and the like can be supported (e.g., installed, secured, attached, etc.) by a support structure. For example, trays containing conduit, cable, wires, and the like (e.g., ladder trays or wire cable trays) can be supported by various support structures in solar and other electrical installations or various other contexts. For example, trays (or other objects) can be supported by ladder rack feet, rack supports, cable tray supports, etc., which may contain strut for attachment to the trays. In different contexts, some cable trays may be installed on a wall (e.g., to be supported by a support bracket relative to a vertical or other wall structure), and some cable trays can be installed on the ground (e.g., supported on the ground surface of a rooftop or other building structure). Specifically, in some contexts, cable trays that contain conduit and cables for solar panels (e.g., solar fields) can be supported by support structures.

In these and other contexts, it may thus be useful to provide a clip to secure the cable tray to a support structure. For example, some arrangements of a cable tray including conduit and cable may be required to be installed on a ground support structure in a solar field, such that the cable tray routes necessary cable or conduit to electrical equipment, including solar panels. In other contexts, the cable trays may provide necessary cable or conduit to other electrical equipment, including HVAC equipment.

Convention methods of installing cable trays to support structures can employ fastener assemblies that are difficult to install at a high rate. In other words, conventional methods of installing cable trays with clips may be inefficient to install on a large (e.g., utility) scale. For example, conventional assemblies for securing a cable tray to a support structure may be multi-component clamp assemblies, which can increase installation time and difficulty. Additionally, it may be advantageous to provide a means of installing cable trays that permit the cable tray to expand and contract as the cable tray experiences thermal expansion. Further, it may be advantageous to provide a means of installing cable trays directly to a mounting surface (e.g., to a concrete slab).

Some examples of the disclosed technology can address these or other issues. For example, some configurations include a tray clip that can be quickly and securely mounted (e.g., installed, secured, fastened) to a support structure for cable trays. Some configurations in particular may be configured to secure ladder trays (or other cable trays) to supporting strut, via engagement with the reentrant lips of standard strut profile(s). Some configurations can allow engagement with other support structures, or to secure other types of objects (e.g., securing piping, electrical cabling, etc. to a supporting strut).

In some examples, tray clips may include a clip body that is integrally formed. Further, some tray clips may include a fastener that is secured within the clip body in a staged or installation orientation (e.g., as shipped and installed). Thus, in some examples, the tray clip may be readily secured to a support structure to further secure a cable tray to the support structure. Relatedly, some examples can allow prefabrication of a tray clip, with a fastener pre-installed to a clip body. The preassembled components can then be collectively attached to the relevant on-site support structure (e.g., as may allow flexible prefabrication of multiple assemblies for a job-site at an off-site location).

In some examples, a tray clip can include a bottom engagement portion (e.g., first engagement portion, strut engagement portion). In some examples, the bottom engagement portion is configured to be secured within a support structure. In some examples, the bottom engagement portion can include a bottom plate (e.g., first plate, strut plate, bottom plate). In some examples, the bottom plate can include opposed fingers (e.g., lower fingers) that extend from the bottom plate. Generally, the opposed fingers can be aligned to collectively engage opposing lip channels defined by strut to secure the tray clip to the strut. In some examples, the bottom plate can include at least two opposed fingers on opposite sides of the bottom plate. In some examples, the opposed fingers can each include a plurality of opposed finger engagement features (e.g., finger engagements) that may extend in a bottom engagement direction (e.g., a first engagement direction, a strut engagement direction). In some examples, the bottom plate can include a fastener housing that may extend in the bottom engagement direction. In some examples, the bottom plate can include a bottom aperture (e.g., bottom cutout, fastener cutout, carriage bolt cutout).

In some examples, a tray clip includes a top engagement portion (e.g., second engagement portion, tray engagement portion). In some examples, the top engagement portion is configured to secure a cable tray. In some examples, the top engagement portion can include a top engagement plate (e.g., second plate, cable tray plate, top plate). In some examples, the top plate may include one or more engagement features (e.g., a one or more top fingers or upper fingers) that extend from the top plate. Generally, the engagement feature(s) can be shaped and oriented to clamp an object to the exterior (lip side) of strut, or to otherwise secure an object relative to the tray clip (e.g., capture the object without clamping). In some examples, one or more top fingers can each include a plurality of top finger engagement features (e.g., finger engagements) that may extend in a top engagement direction (e.g., a second engagement direction, a cable tray engagement direction). In other examples, one or more top fingers can include an engagement tab. In some examples, the top plate can include an aperture such that a fastener may extend through the top plate. In some examples, the top plate may include a protrusion (e.g., abutment, emboss) that extends around the aperture. In some examples, the top plate can include a pair of alignment fingers (e.g., rear fingers) that extend from an opposite side of the top plate than the one or more top fingers.

In some examples, a tray clip includes a clip body. In some examples, the clip body includes a bottom engagement portion (e.g., first engagement portion) and a top engagement portion (e.g., second engagement portion). In some examples, the bottom and top engagement portions are integrally formed. In such examples, the bottom and top engagement portions are integrally connected via an arm (e.g., bar, crush bar, bent arm). Generally, the arm can be configured to hold the engagement portions of the tray clip together during installation, then deform upon actuation of a relevant fastener, to allow the engagement portions to move closer together (e.g., and thereby clamp a cable tray to a strut support). In some examples, the arm may comprise a top arm portion, a bottom arm portion, and a bending portion. In some examples, the top arm portion is integrally formed with and extends away from the top engagement portion (or top engagement plate) and the bottom arm portion is integrally formed with and extends away from the bottom engagement portion (or bottom engagement plate). In some examples, the arm may include a pair of partial cutouts. In other examples, the bending portion may include a pair of partial cutouts.

In some examples, a tray clip includes a fastener (e.g., bolt, carriage bolt). In some examples, a fastener head of the fastener may contact a protrusion of a top plate of a clip body and extend through a top aperture of the top plate, and be threadedly secured within a fastener housing in a bottom plate of the clip body. In some examples, the fastener may be a carriage bolt, with the fastener head being secured within a bottom aperture of the bottom plate and the fastener extending through the top aperture to be secured with a locking nut (e.g., flange locking nut, fastener nut) that may contact the protrusion of the top plate.

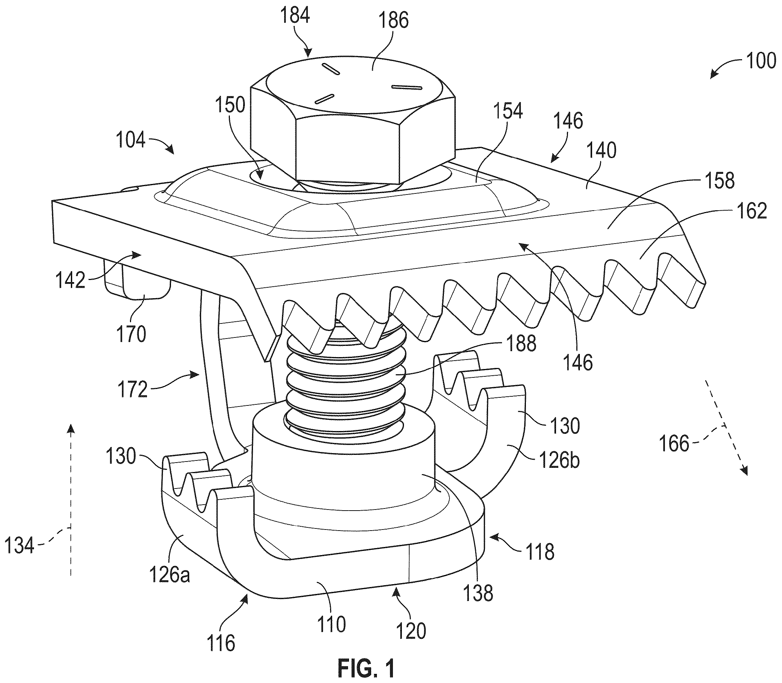

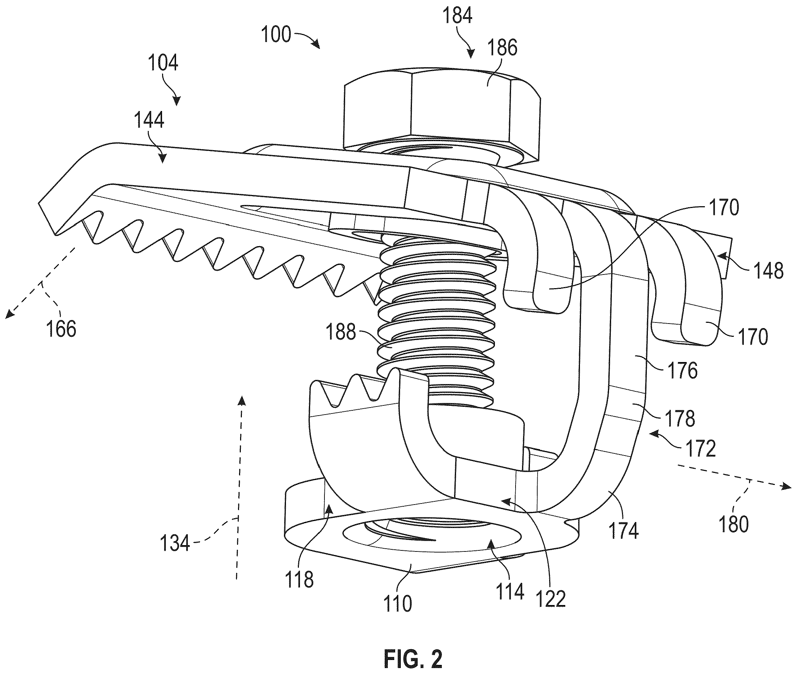

FIG. 1 and FIG. 2 illustrate an example clip for a cable tray (e.g., or conduit) configured as a clip 100. In particular, the clip 100 is configured to secure ladder or wire cable tray to strut and may thus be variously referred to herein as a strut clip 100 or a tray clip 100. In other examples, however, similar clip configurations can be applied to engage other support structures or secure other objects.

In the illustrated example, the tray clip 100 includes a clip body 104. The clip body 104 includes a bottom (or, generally, first) plate 110 (e.g., first engagement portion, strut engagement portion) and a top (or, generally, second) plate 140 (e.g., second engagement portion, tray engagement portion), integrally connected via an arm 172. In the illustrated orientation, the bottom plate 110 is positioned below the top plate 140, although other orientations are possible. The bottom plate 110 can also include a bottom aperture 114, which is configured to accommodate a fastener 184.

Continuing, in the illustrated example, the bottom plate 110 defines a first, second, third, and fourth bottom plate side 116, 118, 120, 122. The first bottom plate side 116 is opposite the second bottom plate side 118. The third bottom plate side 120 is opposite the fourth bottom plate side 122. Further, the first bottom plate side 116 is adjacent to the third and fourth bottom plate sides 120, 122. Generally, a wide range of plate shapes are possible, provided that the top plate extends sufficiently to secure a relevant object and the bottom plate extends sufficiently to engage the lip channels of a relevant strut support.

The bottom plate can include opposed (e.g., bottom) fingers 126a, 126b (collectively, opposed fingers 126). In some configurations, the opposed fingers 126a, 126b are integrally formed with the bottom plate 110. In particular, including as shown the example configuration of the tray clip 100 of FIGS. 1 and 2, the opposed fingers 126a, 126b can extend from the bottom plate 110 on opposite sides so as to be aligned to engage corresponding different lip channels of a strut. For example, as shown in FIGS. 1 and 2, a first opposed finger 126a of the opposed fingers 126 may extend from a first bottom plate side 116, and second opposed finger 126b of the opposed fingers 126a, 126b may extend from the second bottom plate side 118, where the second bottom plate side 118 is opposite from the first bottom plate side 116. The one or more fingers 126a, 126b may extend out from the bottom plate 110 and towards the top plate 140 in a strut engagement direction 134.

In some configurations, the strut engagement direction 134 is perpendicular to a plane defined by the bottom plate 110. In other configurations, the strut engagement direction 134 is non-perpendicular to a plane defined by the bottom plate 110. In the example tray clip 100 of FIGS. 1 and 2, the strut engagement direction 134 is perpendicular to the plane defined by the bottom plate 110 and non-perpendicular to a plane defined by the top plate 140.

In some configurations, including as shown for the example tray clip 100, the opposed fingers 126a, 126b may be offset from one another, as well as on opposite sides of the bottom plate 110. In the particular example shown, to engage strut lips, the opposed fingers 126a, 126b extend laterally outward relative a reference axis 112 (e.g., perpendicular to an axis of the fastener 184 and parallel to an elongate direction of a strut or other support structure), and are offset from each other relative to the reference axis 112. Or, differently framed, the first opposed finger 126a may be closer to the third bottom plate side 120 (e.g., a front side of the bottom plate) and the second opposed finger 126b may be closer to the fourth bottom plate side 122 (e.g., a rear side of the bottom plate). This arrangement may assist in installation, as discussed in greater detail below, by allowing insertion of the fingers 126a, 126b to collectively engage the lip channels of a strut without requiring rotation of the tray clip 100 that would be blocked by interference between the arm 172 and the material of a strut (and without needing to slide the tray clip 100 in from an end of the strut).

In some configurations, it may be advantageous for a tray clip to include strut engagement features. In particular, the tray clip may include engagement features to secure the tray clip to a strut. For example, the pair of opposed fingers 126 can each include engagement features 130 (e.g., bottom teeth, strut teeth). The engagement features 130 extend from a second end of the opposed fingers 126, where the second end is opposite of a first end of the opposed fingers 126 and the first end of the opposed fingers 126 is coupled to the bottom plate 110. In some examples, the engagement features 130 can be oriented and dimensioned to penetrate into material of the strut (e.g., at the base of the relevant lip channel) when the clip 100 is installed.

In some configurations, it may be advantageous for a tray clip to include a fastener housing. For example, as shown in FIGS. 1 and 2, the bottom plate 110 includes a fastener housing 138. The fastener housing 138 extends from the bottom plate 110, and the bottom aperture 114, toward the top plate 140 along the strut engagement direction 134. In the illustrated example, the fastener housing 138 is formed as a cylindrical boss, which may provide a significant length of thread engagement for notably strong securement. In other examples, other threaded features can be provided (e.g., thread impressions, differently shaped or sized bosses, etc.).

Similar to the bottom plate 110, the top plate 140 defines a first, second, third, and fourth top plate side 142, 144, 146, 148. The first top plate side 142 is opposite the second top plate side 144. The third top plate side 146 is opposite the fourth top plate side 148. Further, the first top plate side 142 is adjacent to the third and fourth top plate sides 146, 148.

Continuing, the top plate 140 includes a top aperture 150 that is circumscribed by a protrusion 154. In some configurations, the protrusion 154 fully surrounds the top aperture 150. In other configurations, the protrusion 154 extends partially around the top aperture 150. In some configurations, the protrusion 154 may be in the general form of a polygon, including a rectangle or square. In other configurations, the protrusion 154 may be in the general form of a circle, or any other non-polygonal shape.

Still referring to FIGS. 1 and 2, the top plate 140 includes one or more engagement features 158 configured to engage or otherwise retain (e.g., capture) a tray or other object relative to a support structure (e.g., on an outer surface of the lips of a strut). In some configurations, the one or more engagement features 158 are integrally formed with the top plate 140. In some configurations, including the example configuration of the tray clip 100 of FIGS. 1 and 2, the one or more engagement features 158 can extend from the top plate 140 at the third top plate side 146 (e.g., opposite the arm 172). In some examples, including as shown in FIGS. 1 and 2, the one or more engagement features 158 may extend out from the top plate 140 and towards the bottom plate 110 in a tray engagement direction 166.

In some configurations, the tray engagement direction 166 is perpendicular to the plane defined by the top plate 140. In other configurations, the tray engagement direction 166 is non-perpendicular to the plane defined by the top plate 140. In the example tray clip 100 of FIGS. 1 and 2, the tray engagement direction 166 extends from the bottom plate 110 at about a 135-degree angle and non-perpendicular to the plane defined by the bottom plate 110.

In some configurations, it may be advantageous for a tray clip to include particular engagement features (e.g., to secure a relevant tray to a strut). For example, the engagement features 158 can be formed to include an array of protrusions 162 (e.g., angled teeth, as shown, or protrusions of various other profiles, including flattened tabs, rounded protrusions, etc.). The protrusions 162 extend from a second end of the top fingers 158, where the second end is opposite of a first end of the top fingers 158 and the first end of the top fingers 158 is coupled to the top plate 140. The protrusions 162, for example, can help to clamp a flange of a ladder tray (or other tray component) to a strut, to ensure support the tray relative to the strut.

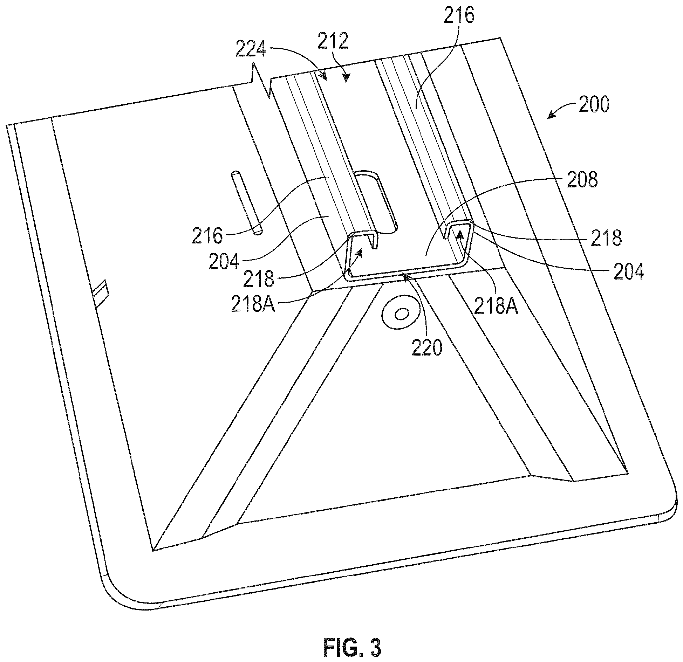

In some configurations, it may be advantageous for a tray clip to include fingers for alignment. For example, the example tray clip 100 includes one or more alignment fingers 170 on the fourth top plate side 148. Herein, the one or more alignment fingers 170 will be generally referred to as alignment fingers 170, unless specification is needed, but it should be appreciated that there can be one alignment finger or more than one alignment fingers. As discussed in greater detail below, the alignment fingers 170 can assist in securing the tray clip 100 to a support structure (see, e.g., support structure 200 of FIG. 3).

In some configurations, the alignment fingers 170 extend in a non-perpendicular direction from the top plate 140. In some configurations, the alignment fingers 170 extend in a direction from the top plate 140 that is non-parallel to the tray engagement direction 166. In other configurations, the alignment fingers 170 extend in a direction from the top plate 140 that is parallel to the tray engagement direction 166. In some configurations, including the example tray clip 100 of FIGS. 1 and 2, the alignment fingers 170 extend in a perpendicular direction from the top plate 140.

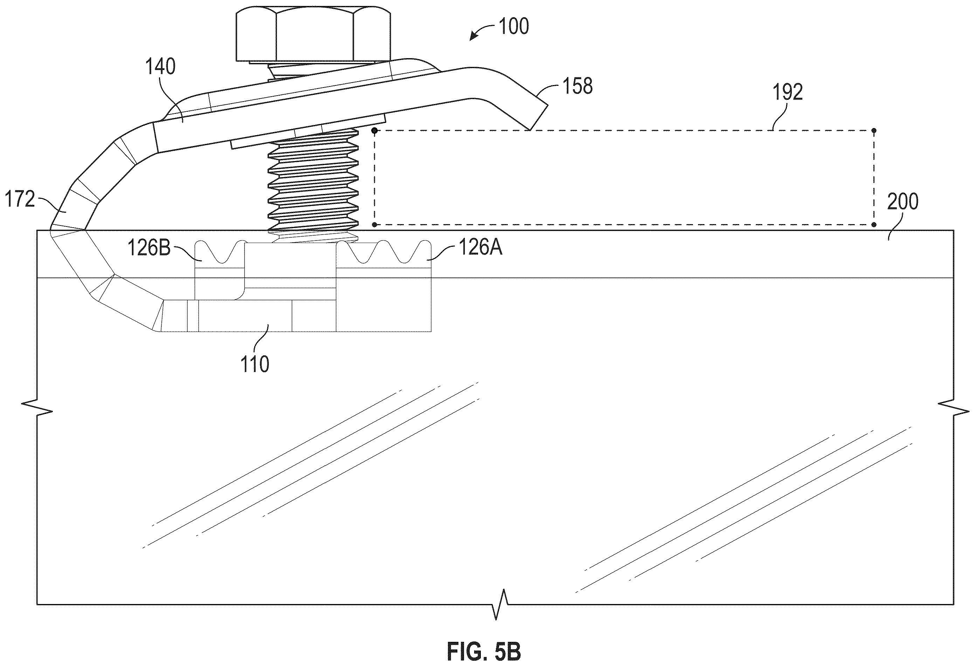

Still referring to FIGS. 1 and 2, the tray clip 100 includes the arm 172 that extends between the bottom plate 110 and top plate 140. As shown, the arm 172 is located between the alignment fingers 170, on the fourth top plate side 148 (i.e., opposite the protrusions 162 or other engagement features), although other locations are possible. The arm 172 integrally extends between the top plate 140 and the bottom plate 110 and is configured to both define and maintain a spacing between the plates 140, 110 and to be deformed to move the plates 140, 110 together to secure a tray or other object. In the installation configuration illustrated in FIGS. 1 and 2, the arm 172 is in an undeformed state. As further discussed below, in an installed configuration, the arm can be deformed to define a smaller spacing between the top and bottom plates 140, 110 (see, e.g., FIG. 5B).

Generally, the arm 172 may be formed to deform, upon axial loading by a fastener, at a predetermined location between - and clear of - the plates 110, 140. For example, the arm 172 may be formed to be concave relative to the space between the plates 110, 140, with a deformation locus defined by a maximum concavity depth that is aligned about halfway between the plates 110, 140 to ensure appropriate deformation during installation (e.g., outwardly, away from the space between the plates 110, 140 as shown in FIG. 5B). For example, with an outwardly protruding angle or curvature, the arm 172 can be readily induced to remain clear of the plates 110, 140 when deformed during installation to move the plates 110, 140 closer together. In other examples, however, other geometries are possible, including with deformation loci that are differently located (e.g., within a middle 50% of an undeformed spacing between the plates 110, 140).

Continuing, the arm 172 includes a bottom arm portion 174 (e.g., a first arm portion), a top arm portion 176 (e.g., a second arm portion), and a bending portion 178 (e.g., crush portion, third arm portion). The bottom arm portion 174 extends from the bottom plate 110 and the top arm portion 176 extends from the top plate 140. In some configurations, including the tray clip 100, the bending portion 178 extends between the bottom arm portion 174 and the top arm portion 176.

In some configurations, the top arm portion 176 extends in a perpendicular direction from the top plate 140. In some configurations, the top arm portion 176 extends in a direction from the top plate 140 that is non-parallel to the tray engagement direction 166. In other configurations, the top arm portion 176 extends in a direction from the top plate 140 that is parallel to the tray engagement direction 166. In some configurations, including the example tray clip 100 of FIGS. 1 and 2, the top arm portion 176 extends in a non-perpendicular direction from the top plate 140.

In some configurations, the bottom arm portion 174 extends in a perpendicular direction from the bottom plate 110. In some configurations, the bottom arm portion 174 extends in a direction from the bottom plate 110 that is non-parallel to the strut engagement direction 134. In other configurations, the bottom arm portion 174 extends in a direction from the bottom plate 110 that is parallel to the strut engagement direction 134. In some configurations, including the example tray clip 100 of FIGS. 1 and 2, the bottom arm portion 174 extends in a non-perpendicular direction from the bottom plate 110.

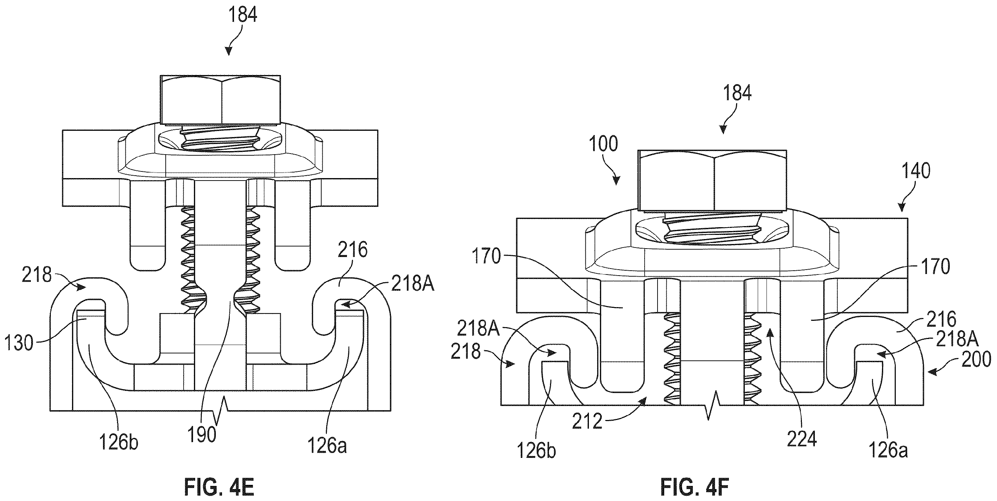

In some configurations, it may be advantageous for the arm to be modified for better installation. For example, the arm 172 may include cutouts 190 (see, e.g., FIG. 4E) on either lateral side of the arm. Specifically, in some configurations, the bending portion 178 of the arm may include the cutouts 190. Thus, and as discussed in greater detail below, the arm 172 will deform (e.g., bend, crush, etc.) in a deformation direction 180.

In some configurations, the deformation direction 180 is parallel to the bottom plate 110. In some configurations, the deformation direction 180 is non-parallel to the bottom plate 110. In some configurations, the deformation direction 180 is parallel to the top plate 140. In some configurations, the deformation direction 180 is non-parallel to the top plate 140. In some configurations, the deformation direction 180 is non-parallel to both the top plate 140 and the bottom plate 110. In other configurations, the deformation direction 180 is parallel to one of the bottom or top plates 110, 140 and non-parallel to the other of the bottom or top plates 110, 140.

Still referring to FIGS. 1 and 2, the tray clip 100 includes a fastener 184 (e.g., bolt, carriage bolt). The fastener 184 includes a fastener head 186 and a fastener body 188. In some configurations, as shown in FIGS. 1 and 2, the fastener head 186 is secured via the top plate 140 and contacts the protrusion 154, while the fastener body 188 extends through the top aperture 150 and is received in the fastener housing 138. As discussed in greater detail below, as the tray clip 100 is secured to a support structure and as the tray clip secures a cable tray, the fastener may be tightened such that the fastener body 188 protrudes through the bottom aperture 114. To secure the tray clip 100, the fastener head 186 may be tightened. In some examples, the top aperture 150 can be formed with an oblong cross-section, to allow the fastener body 188 to change directions relative to the top plate 140 as the fastener 184 is tightened to move the plates 110, 140 closer together.

In some configurations, the tray clip is secured to a support structure. In some examples, including the example shown in FIG. 3, a support structure 200 can be a strut fastened to a mounting base. In such configurations, the support structure 200 comprises side walls 204 and a bottom plate 208. The side walls 204 are integrally formed with the bottom plate 208 such that the side walls and bottom plate 208 form a channel 212. Additionally, each of the side walls 204 define a lip 216 that curls inward into the channel 212. The space between the lip 216 and the side walls 204 defines a strut lip profile 218 with corresponding lip channel 218A on opposing sides of the entrance into the channel 212 of the strut. The support structure also defines an end opening 220, and a top opening 224 that extends along the channel 212 between the lips 216.

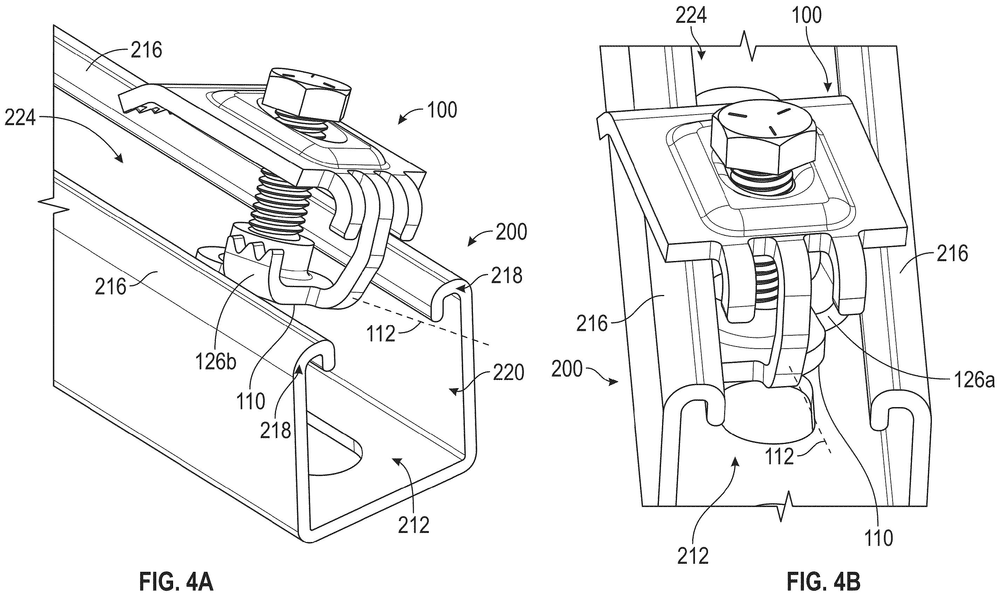

Example installation of a cable tray to a support structure with a tray clip can be seen in FIGS. 4A-4F. In some installations, the tray clip 100 can be slid through the end opening 220 of the support structure 200 into the channel 212. Conveniently, in other installations, and as shown in FIG. 4A, the tray clip 100 can be inserted through a top opening 224 of the support structure 200. Specifically, corresponding with the axial offset of the opposed fingers 126a, 126b, the tray clip 100 may be oriented so that the opposed finger 126a is inserted through the top opening 224 and into the channel 212, then further oriented so that the opposed finger 126b is also inserted through the top opening 224 and into the channel 212. Thus, as shown in FIG. 4B, the bottom plate 110 can be aligned within the support structure 200 to be secured by the opposed fingers 126a, 126b. However, it should be considered that the opposed finger 126b may be inserted and secured within the support structure 200 before the opposed finger 126a.

As noted above, the offset of the opposed fingers 126a, 126b from each other can assist in efficient installation. Still referring to FIGS. 4A and 4B, for example, the offset of the fingers 126a, 126b along the reference axis 112 can reduce the rotation (e.g., yawing, tilting, and rolling) required to insert the fingers 126a, 126b through the opening 224 and past the lips 216 of the tray clip 100. Correspondingly, interference between the arm 172 and the lips 216 can be avoided, without needing to insert the clip 100 into the very end of the support structure 200 (e.g., allowing insertion of the clip 100, in an undeformed state, only through the top opening 224).

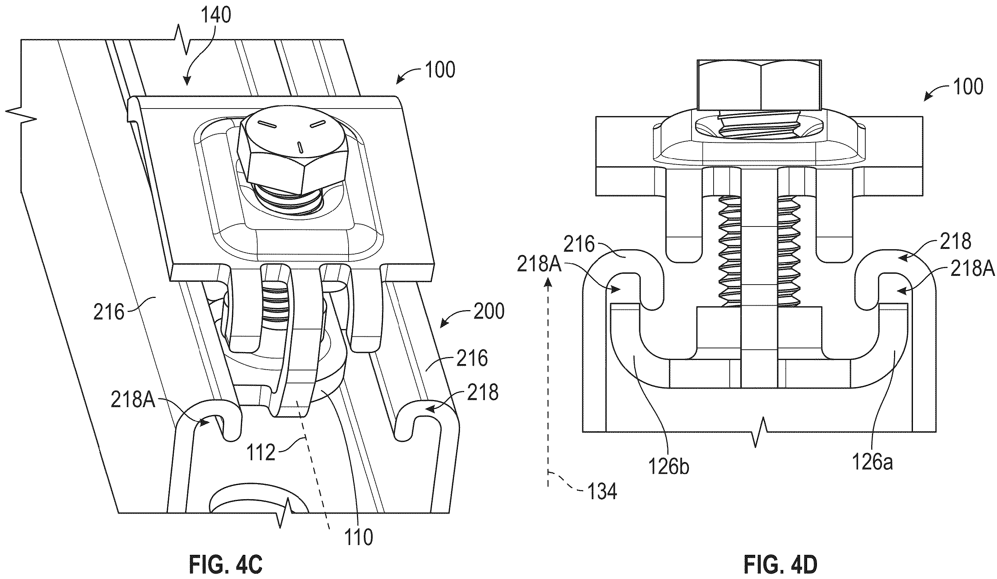

Continuing, once the bottom plate 110 is aligned to be secured within the support structure 200, the tray clip 100 oriented such that top plate 140 and the support structure 200 are generally in parallel, as shown in FIG. 4C. Further, the tray clip 100 should be moved in the strut engagement direction 134 to align the opposed fingers 126 within the strut lip profiles 218, as shown in FIG. 4D. Once the opposed fingers 126 are positioned within the strut lip profiles 218, the fastener 184 may be tightened to secure a cable tray, as shown in FIG. 4E. Once the fastener 184 is tightened, the opposed fingers 126 may be aligned to laterally engage with the lip profile 218, as shown in FIG. 4F. Specifically, in some configurations, the engagement features 130 may engage the lip profile 218 so as to penetrate into the material of the support structure 200 at the base of the lip channel.

In some configurations, including as shown in FIG. 4F, once the fastener 184 is tightened, the top plate 140 may be positioned closer to the lips 216 of the support structure 200. In some configurations, as the top plate 140 may be positioned closer to the lips 216, the alignment fingers 170 may be positioned within the top opening 224 of the channel 212. Further, the alignment fingers 170 may be positioned between the lips 216, which may further secure the tray clip 100 to the support structure 200 and prevent any shifting of the tray clip 100 within the support structure 200.

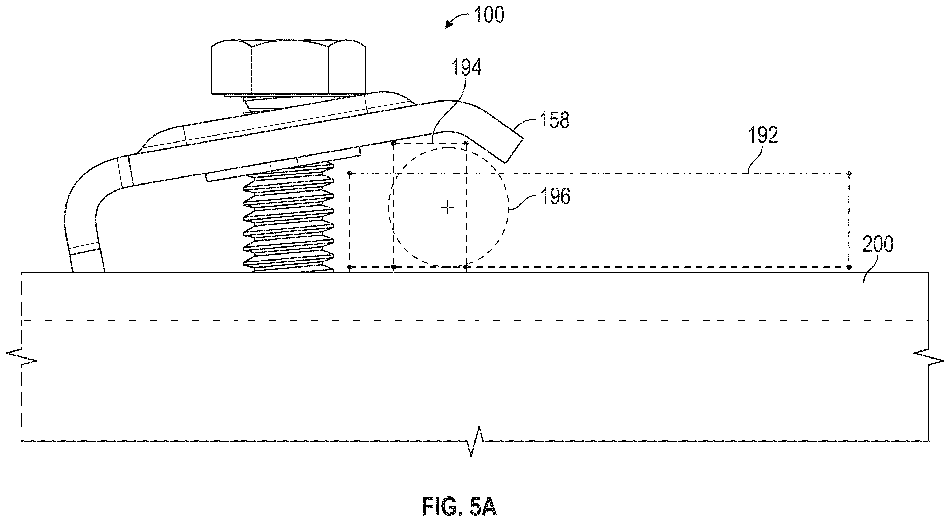

Thus, via adjustment of the fastener 184, the tray clip may be configured to secure components to strut (or other support structures). For example, as shown in the installed orientation of FIGS. 5A and 5B, the tray clip 100 may secure a ladder tray by engaging a flange 192 or other feature of the tray, to capture the flange 192 or other feature between the engagement features 158 (e.g., top fingers, engagement fingers) and the support structure 200. In other configurations, the tray clip 100 may secure other components, including a structural member of another tray. For example, as also shown in FIG 5A, the tray clip 100 may secure a taller flange component 194 of a ladder or other tray, or a round (e.g., circular) wire 196 or other structural member of a cable tray formed by overlapping wires, cables, oblong extrusions, etc. In general, in this regard, different degrees of deformation of the arm (e.g., differing from the deformation shown in FIG. 5B) can result in different spacing of the plates 110, 140 and corresponding different configurations of the tray clip 100, in the installed configuration, to secure corresponding different components to the support structure 200.

In the example illustrated in FIGS. 5A and 5B, the tray clip 100 is installed with a small amount of clearance between the flange 192 (or other feature) and the engagement features 158, with the flange 192 seated on the support structure 200. Similarly, as shown in FIGS. 4F and 5B, a small amount of clearance may be provided between the fingers 126a, 126b and the blind end (e.g., base) of the channels 218A (or other interior surfaces of the lip channels 218A). So long as the total clearance does not exceed the depth of the corresponding channel 218A, the fingers 126a, 126b can be maintained within the corresponding channel 218A and the tray clip 100 can thus remain in place to secure the flange 192 (or other component). However, in some installations, the fingers 126a, 126b can be seated firmly within the channel 218A or the engagement features 158 can be seated firmly on the flange 192 (or other component).

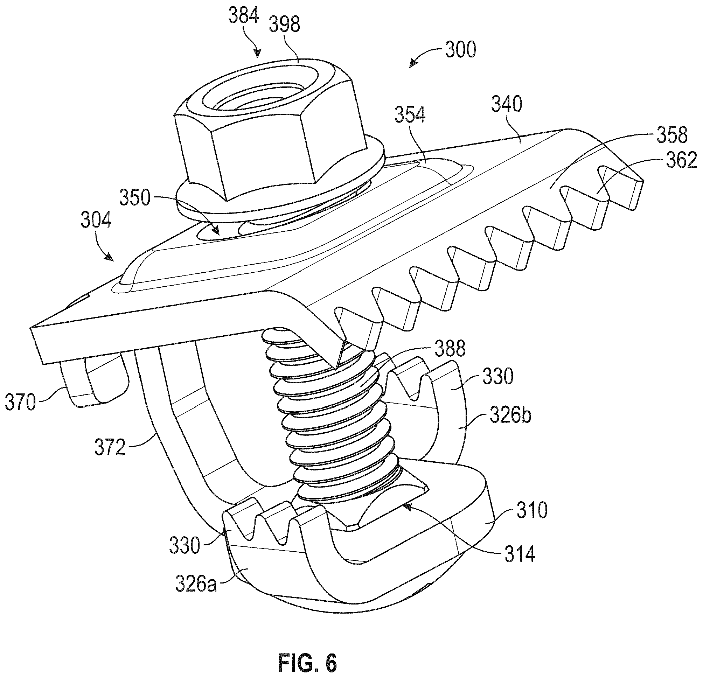

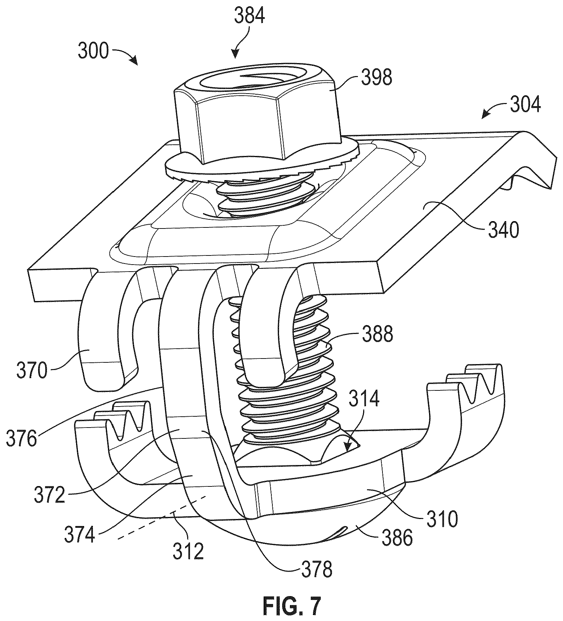

In some aspects, it may be advantageous for a tray clip to include a differently configured fastener. For example, as shown in FIGS. 6 and 7, an example tray clip 300 may include a fastener 384 that is configured as a carriage bolt. The tray clip 300 is similar to the tray clip 100, with correspondingly similar numbering in the 300 series, and discussion of particular numbered features above thus applies to similarly numbered features below unless otherwise indicated. For example, the tray clip 300 includes a clip body 304, top plate 340, a bottom plate 310, an arm 372 extending therebetween with a bottom arm portion 374 (e.g., a first arm portion), a top arm portion 376 (e.g., a second arm portion), and a bending portion 378 (e.g., crush portion, third arm portion), opposed fingers 326a, 326b (e.g., offset along a reference axis 312), one or more engagement features 358, 330 (e.g., top teeth 362), alignment fingers 370, a top aperture 350 and a corresponding protrusion 354, and a bottom aperture 314.

Still referring to FIGS. 6 and 7, the tray clip 300 of FIGS. 6 and 7 is different from the tray clip 100 of FIGS. 1 and 2 in some other aspects. For example, the fastener 384 includes a fastener head 386 that is secured within the bottom plate 310. Further, the fastener 384 includes a fastener body 388 that extends through the top plate 340 and is secured via a fastener nut 398 (e.g., flange lock nut). Accordingly, the bottom plate 310 may not include an integrally formed thread (e.g., threaded extrusion) as does the bottom plate 110. Rather, for example, the bottom plate 310 can include a squared (or other) aperture to hold the fastener head 386 against rotation as the fastener nut 398 is tightened.

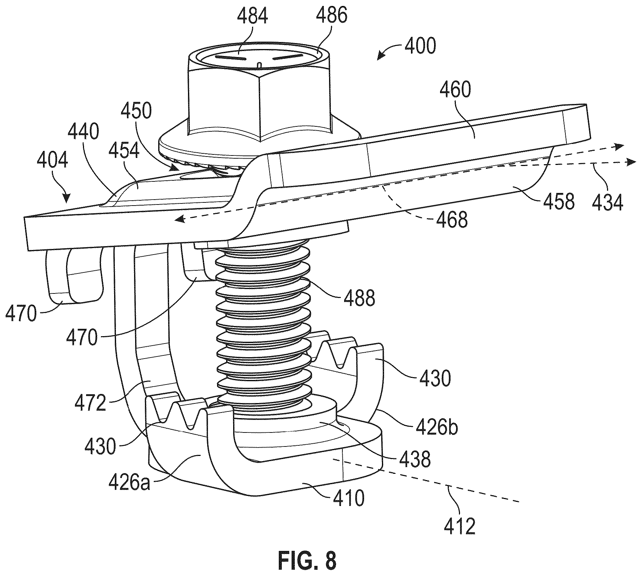

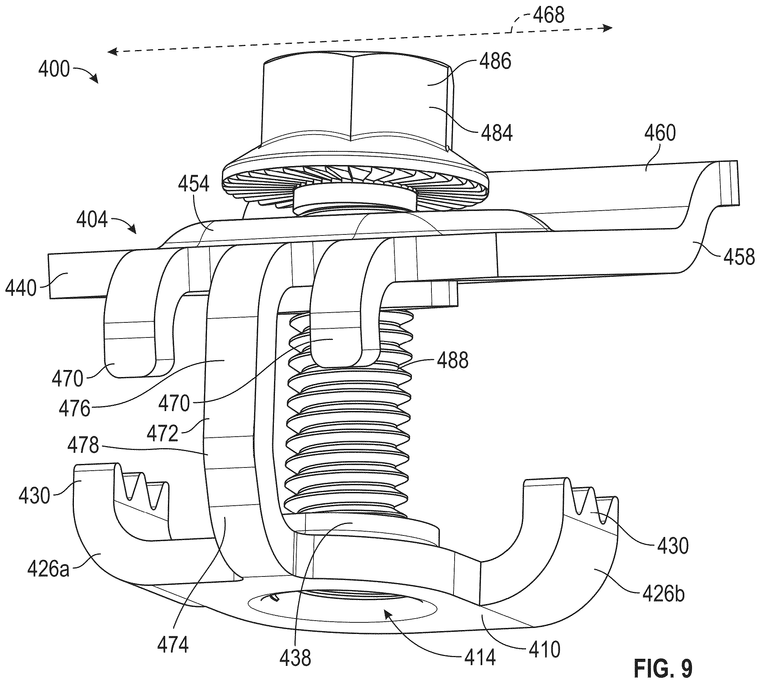

In some aspects, it may be advantageous for a tray clip to include a different structure to secure components to strut. For example, FIGS. 8 and 9 show an example tray clip 400. The tray clip 400 is an alternate configuration of the tray clip 100, with correspondingly similar numbering in the 400 series. Discussion of particularly numbered features above thus applies to similarly numbered features below unless otherwise indicated. For example, the tray clip 400 includes a clip body 404, top plate 440, a bottom plate 410, an arm 472 extending therebetween with a bottom arm portion 474 (e.g., a first arm portion), a top arm portion 476 (e.g., a second arm portion), and a bending portion 478 (e.g., crush portion, third arm portion), opposed fingers 426a, 426b (e.g., offset along a reference axis 412), bottom engagement features 430, alignment fingers 470, top aperture 450 and corresponding protrusion 454, a bottom aperture 414, a fastener housing 438, one or more top engagement features 458, and a fastener 484 including a fastener head 486 and a fastener body 488, to which the above discussion of corresponding parts in the 100 series also applies unless otherwise indicated.

Still referring to FIGS. 8 and 9, the tray clip 400 is different from the tray clip 100 of FIGS. 1 and 2 some aspects. For example, the one of more engagement features 458 may include an engagement tab 460 that extends out from the top plate 440 and away from the bottom plate 410. In particular, in the example shown, the one or more engagement features 158 can extend as part of an outward bend of the top plate 440, extending away from the bottom plate 410, supporting the engagement tab 460 (e.g., without teeth) at a larger spacing from the bottom plate 410 than provided for the remainder of the top plate 440. In other words, the engagement tab 460 (or tabs, in some examples) can extend away from the top plate 440 with an offset away from the bottom plate 410.

With such an arrangement, the engagement tab 460 may secure a component to a strut by capturing the component against removal (e.g., vertical removal) while allowing the component to translate relative to the tray clip 400 in a slide direction 468. For example, the slide direction 468 may be substantially perpendicular to a strut engagement direction 434.

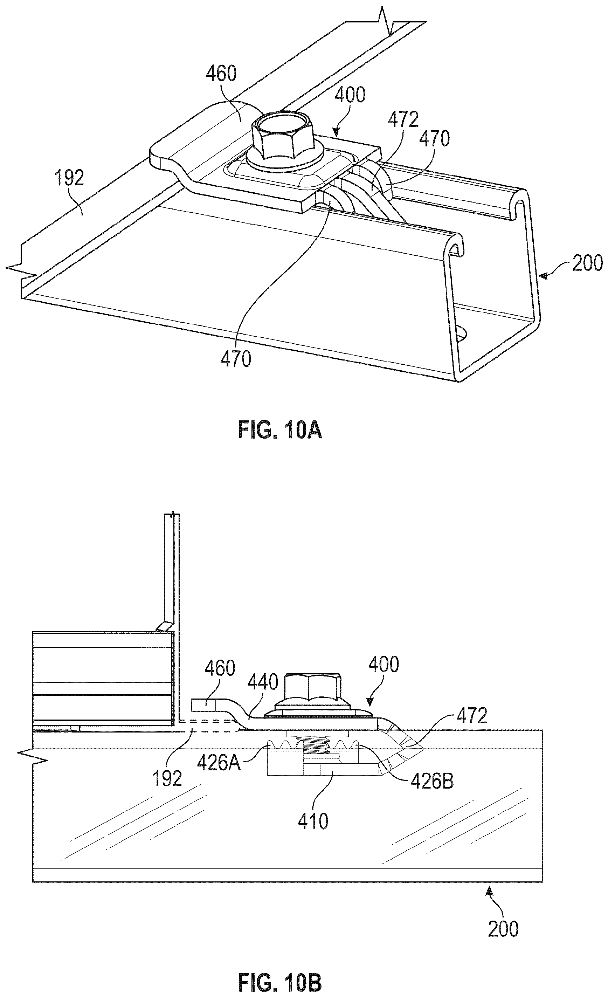

Thus, the tray clip 400 may secure the flange 192 of a ladder tray to the support structure 200 (e.g., strut), as shown in FIG. 10A and FIG. 10B. As also described above, the engagement tab 460 may secure the flange 192 to the support structure such that the flange 192 cannot be removed from the support structure 200 (e.g., in movement perpendicularly away from the top surface of the support structure 200). However, the engagement tab 460 may also permit the ladder tray to move in a direction parallel to the slide direction 468 (e.g., along a top surface of the support structure 200). This may advantageously allow the tray clip 400 to secure the ladder tray while accommodating for thermal expansion, due to which the flange 192 may need to move relative to the tray clip 400, to accommodate dimensional changes.

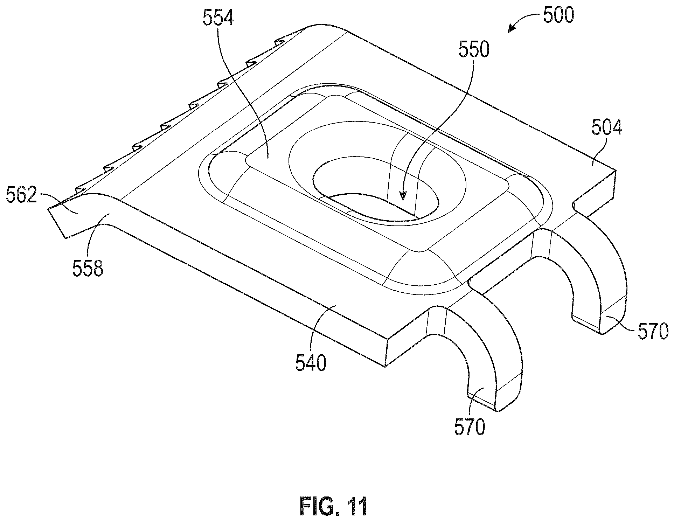

In some aspects, it may be advantageous for a tray clip to be secured directly to a surface to secure components. For example, as shown in FIG. 11, an example tray clip 500 is directly secured to a support structure (i.e., ground surface, extended surface, mounting surface, etc.). The tray clip 500 is similar to the tray clip 100, with correspondingly similar numbering in the 500 series, and discussion of particularly numbered features above thus applies to similarly numbered features below unless otherwise indicated. For example, the tray clip 500 includes a clip body 504 with a plate 540, alignment fingers 570, a top aperture 550 and corresponding protrusion 554, and one or more top engagement features 558 (e.g., with tray teeth 562), to which the above discussion of corresponding parts in the 100 series also applies unless otherwise indicated.

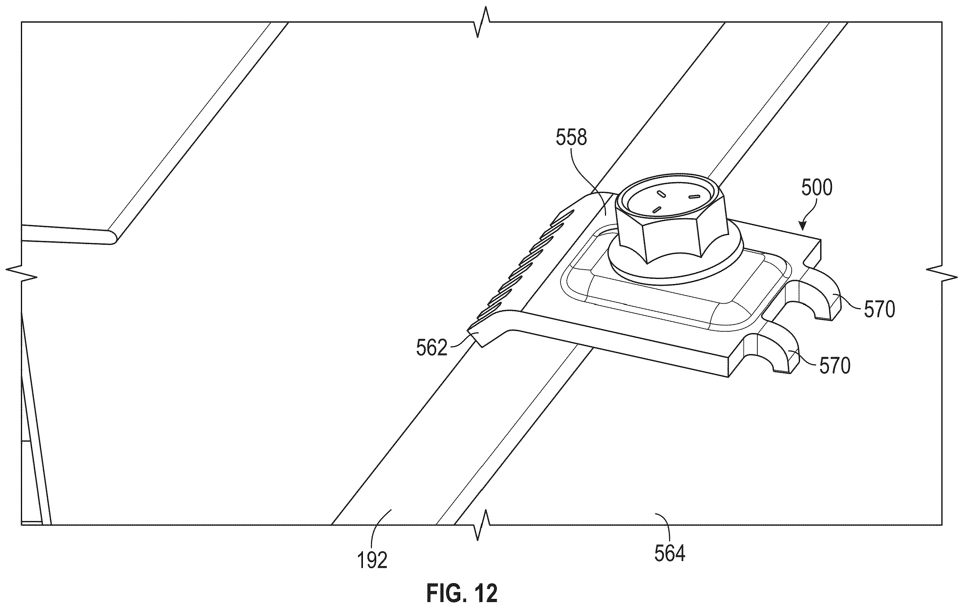

Still referring to FIG. 11, the tray clip 500 is different from the tray clip 100 of FIGS. 1 and 2 in some aspects. For example, the tray clip 500 does not include an arm and a bottom plate, thus also not including opposed fingers, bottom engagement features, and a bottom aperture for a fastener. Thus, the tray clip 500 may be installed directly to a ground surface 564 instead of a support structure 200, as shown in FIG. 12. In this regard, the alignment fingers 570 may provide additional engagement of the tray clip 500 with the support surface 564 (e.g., concrete slab) to secure the tray clip 500 (e.g., to resist rotation relative to the support surface 564).

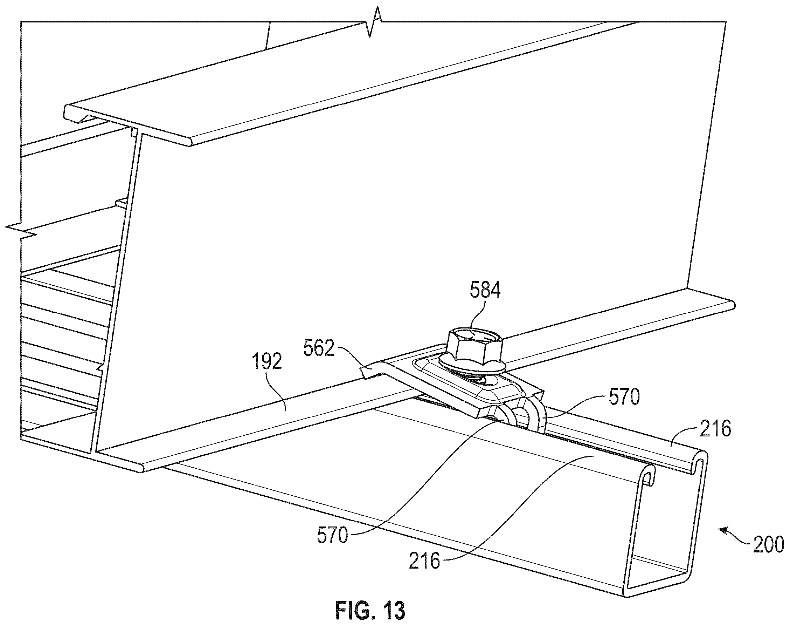

In other aspects, the tray clip 500 may still be secured to support structure, as shown in FIG. 13. For example, the tray clip 500 may be secured by a fastener 584, similar to the fastener 184, that engages a nut within the support structure 200 (e.g., a strut nut), to secure the tray clip 500 to the support structure 200 and thus secure the flange 192 (or other structure). In this configuration, the alignment fingers 570 may engage with the lips of the support structure 200, to help align the tray clip 500 with the support structure 200, as discussed above.

In some examples, the tray clip 500 may be a modified version of other tray clips discussed above (e.g., either of the tray clips 100 or 300). For example, a deformable arm of a tray clip as discussed above may be easily separate (e.g., clipped) to separate the plate 540 for separate use from a corresponding bottom plate (not shown). In this way, for example, a user may derive still further adaptable utility from the various tray clips of the disclosed technology.

In some implementations, devices or systems disclosed herein can be utilized, manufactured, installed, etc. using methods embodying aspects of the disclosed technology. Correspondingly, unless otherwise indicated, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated, discussion herein of any method of manufacturing or using for a particular device or system, including installing the device or system, should be understood to disclose, as examples of the disclosed technology, the utilized features and implemented capabilities of such device or system.

For example, a method of attaching a clip to strut to secure a tray can include providing a strut clip that includes a clip body and a fastener. For example, referring to FIGS. 1 and 2, the method can include providing the tray clip 100 that includes the clip body 104 and the fastener 184 (or other clips disclosed herein).

Continuing, the method can include aligning the opposed fingers of the clip with lip channels of the strut. For example, referring to FIGS. 4A-4D, the method can include aligning the opposed fingers 126a, 126b of the tray clip 100 with the lip channels 218A of the support structure 200.

In some examples, aligning the opposed fingers with the lip channels can include inserting the opposed fingers through a top opening of the strut. For example, as shown in FIGS. 4A and 4B, the tray clip 100 can be inserted through the top opening 224 of the support structure 200, with the opposed finger 126a inserted through the top opening 224 and into the channel 212, then further oriented so that the opposed finger 126b is also inserted through the top opening 224 and into the channel 212. As also noted above, the offset configuration of the opposed fingers 126 can be particularly beneficial in this regard by reducing the rotation required to insert the fingers 126a, 126b through the opening 224 and past the lips 216 of the support structure 200 (e.g., thereby avoiding clearance issues with the arm 172).

In some examples, the method can include aligning the tray (or other object) between the engagement feature of the clip and the strut. For example, referring to FIGS. 5A and 5B, the method can include aligning a flange 192 (or other feature of a tray) between the engagement features 158 of the tray clip 100 and the support structure 200.

In some examples, the method can include adjusting the fastener to decrease a distance between the first and second plates by deforming the arm, and thereby to move the clip body from an installation orientation, with the arm in an undeformed orientation, to an installed orientation, with the arm in a deformed orientation, to capture the tray between the engagement feature and the strut, with the arm extending through a top opening of the strut and the opposed fingers secured within the lip channels of the strut. For example, referring to FIGS. 4E, 4F, 5A, and 5B, the fastener 184 can be tightened to deform the arm 172 and thereby decrease the distance between the top plate 140 and the bottom plate 110. Accordingly, the clip 100 can capture the flange 192 between the engagement features 158 and the support structure 200, with the arm 172 extending through the top opening 224 and the opposed fingers 126a, 126b secured within the lip channels 218A.

In some examples, adjusting the fastener to deform the arm can include deforming the arm outwardly away from a space between the first and second plates. For example, as shown in FIGS. 1 and 5B, the arm 172 can deform in the deformation direction 180, outwardly away from the space between the top plate 140 and the bottom plate 110 to secure the clip 100 and a tray relative to strut.

In some examples, the fastener can be rotated to deform the arm. In some examples, the fastener can be threadedly engaged with the second plate. For example, the fastener body 188 can be threadedly engaged with the fastener housing 138 of the bottom plate 110.

Similar method operations can be implemented for other clips according to the disclosure, including the tray clips 300 and 400 of FIGS. 6-10B.

Thus, examples of the disclosed technology can provide improved systems and methods for securing a tray clip onto a strut or other support structure and securing a component of various (e.g., a structural member of another tray or a ladder tray) to support members (e.g., strut). For example, as detailed above, some configurations can allow for simplified installation and securement of components.

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "substantially parallel" indicates a direction that is within ± 12 degrees of a reference direction (e.g., within ± 6 degrees or ± 3 degrees), inclusive. Similarly, unless otherwise limited or defined, "substantially perpendicular" similarly indicates a direction that is within ± 12 degrees of perpendicular a reference direction (e.g., within ± 6 degrees or ± 3 degrees), inclusive. Correspondingly, "substantially vertical" indicates a direction that is substantially parallel to the vertical direction, as defined relative to the reference system (e.g., a local direction of gravity, by default), with a similarly derived meaning for "substantially horizontal" (relative to the horizontal direction). Discussion of directions "transverse" to a reference direction indicate directions that are not substantially parallel to the reference direction. Correspondingly, some transverse directions may be perpendicular or substantially perpendicular to the relevant reference direction.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "exactly one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of" (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

Also as used herein, unless otherwise limited or defined, "integral" and derivatives thereof (e.g., "integrally") describe elements that are manufactured as a single piece without fasteners, adhesive, or the like to secure separate components together. For example, an element that is stamped, cast, or otherwise molded as a single-piece component from a single piece of sheet metal or using a single mold, without rivets, screws, other fasteners, or adhesive to hold separately formed pieces together is an integral (and integrally formed) element. In contrast, an element formed from multiple pieces that are separately formed initially then later connected together, is not an integral (or integrally formed) element.

As used herein, unless otherwise limited or specified, "substantially identical" refers to two or more components or systems that are manufactured according to the same process and specification, with variation between the components or systems that are within the limitations of acceptable tolerances for the relevant process or specification. For example, two components can be considered to be substantially identical if the components are manufactured according to the same standardized manufacturing steps, with the same materials, and within the same acceptable dimensional tolerances (e.g., as specified for a particular process or product).

Unless otherwise specified or limited, the terms "about" and "approximately," as used herein with respect to a reference value, refer to variations from the reference value of ± 20% or less (e.g., ± 15, ± 10%, ± 5%, etc.), inclusive of the endpoints of the range. Similarly, as used herein with respect to a reference value, the term "substantially equal" (and the like) refers to variations from the reference value of ± 5% or less (e.g., ± 2%, ± 1%, ± 0.5%) inclusive. Where specified in particular, "substantially" can also indicate a significant variation relative to a reference value. For example, the term "substantially less" than a reference value (and the like) indicates a value that is reduced from the reference value by 30% or more (e.g., 35%, 40%, 50%, 65%, 80%), and the term "substantially more" than a reference value (and the like) indicates a value that is increased from the reference value by 30% or more (e.g., 35%, 40%, 50%, 65%, 80%).

Unless otherwise specifically indicated, ordinal numbers are used herein for convenience of reference, based generally on the order in which particular components are presented in the relevant part of the disclosure. In this regard, for example, designations such as "first," "second," etc., generally indicate only the order in which a thus-labeled component is introduced for discussion and generally do not indicate or require a particular spatial, functional, temporal, or structural primacy or order.

Unless otherwise specifically indicated, directional terms are also used herein for convenience of reference, e.g., relative to a selected (fixed) reference frame for a particular component or relative to a contextual reference frame of a particular installation. Thus, for example, whereas described "bottom" and "top" components may exhibit a corresponding relationship relative to a reference frame of a particular example, these components may not necessarily be "bottom" or "top" components in an absolute sense (e.g., in all possible installations of a particular clip).

In some implementations, devices or systems disclosed herein can be utilized, manufactured, installed, etc. using methods embodying aspects of the disclosed technology. Correspondingly, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, should be understood to disclose, as examples of the disclosed technology, the utilized features and implemented capabilities of such device or system.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Feature(s) described in connection with the strut clip, system and/or any component(s) and/or feature(s) may have corresponding features definable and/or combinable with respect to a method or vice versa, and these embodiments are specifically envisaged.

The previous description of the disclosed examples is provided to enable any person skilled in the art to make or use the disclosure. Various modifications to these examples will be readily apparent to those skilled in the art, and the generic principles defined herein may be applied to other examples without departing from the spirit or scope of the disclosed technology. Thus, the disclosure is not intended to be limited to the examples shown herein but is to be accorded the widest scope consistent with the principles and novel features disclosed herein.

## Claims

1. A strut clip (100) to secure a tray to a strut that includes lip channels (218A) and a top opening (224), the strut clip (100) comprising:
a clip body (104), the clip body (104) including:
a first plate (140), the first plate (140) including a first aperture (150) and an engagement feature (158);
a second plate (110), the second plate (110) including a second aperture (114) and opposed fingers (126a, 126b) that extend from the second plate (110) toward the first plate (140); and
an arm (172) connected to and extending between the first plate (140) and second plate (110); and
a fastener (184) secured through the first aperture (150) and the second aperture (114),
the fastener (184) being movable relative to the first and second plates (140, 110) to decrease a distance between the first and second plates (140, 110) by deforming the arm (172), and thereby to move the clip body (104) from an installation orientation, with the arm (172) in an undeformed orientation, to an installed orientation, with the arm (172) in a deformed orientation, to capture the tray between the engagement feature (158) and the strut, with the arm (172) extending through the top opening (224) of the strut and the opposed fingers (126a, 126b) secured within the lip channels (218A) of the strut.

2. The strut clip of claim 1, wherein the arm (172) is concave relative to a space between the first and second plates (140, 110), so as to deform outwardly away from the space between the first and second plates (140, 110) to move from the undeformed orientation to the deformed orientation.

3. The strut clip of claim 1 or claim 2, wherein the opposed fingers (126a, 126b) include a first opposed finger (126a) and a second opposed finger (126b); and
wherein the strut clip (100) defines a reference axis (112) configured to extend in parallel with an elongate direction of the strut, the first opposed finger (126a) extends laterally in a first direction relative to the reference axis (112), the second opposed finger (126b) extends laterally in a second direction relative to the reference axis (112), and the first opposed finger (126a) is offset from the second opposed finger (126b) along the reference axis (112).

4. The strut clip of any one of claims 1 to 3, wherein one or more of:
the engagement feature (158) includes an engagement tab (460) that extends away from the second plate (110); or
the engagement feature (158) is configured to engage one or more of a ladder tray (192) or a wire cable tray.

5. The strut clip of any one of claims 1 to 4, wherein the clip body (104) includes alignment fingers (170) extending from the first plate (140), opposite the engagement feature (158), the alignment fingers (170) being oriented to be received into the top opening (224) of the strut in the installed orientation to align the strut clip (100) relative to the strut, and optionally wherein the alignment fingers (170) are configured to engage lip profiles (218) of the strut.

6. The strut clip of any one of claims 1 to 5, wherein one or more of:
the fastener (184) extends through the first aperture (150) and is threadedly engaged with the second aperture (114); or
the first aperture (150) extends through a protrusion (154) of the first plate (140).

7. The strut clip of any one of claims 1 to 6, wherein the clip body (104) integrally includes the first plate (140), the second plate (110), and the arm (172), and optionally wherein the second plate (110) integrally includes a threaded profile (138) that engages the fastener (184).

8. A system comprising:
a strut clip (100) according to any one of claims 1 to 7; and
a strut (200) including lip channels (218A) and a top opening (224),
wherein the opposed fingers (126a, 126b) of the strut clip (100) are secured within the lip channels (218A) of the strut (200) and the arm (172) extends through the top opening (224) of the strut (200).

9. The system of claim 8, further comprising a tray (192) captured between the engagement feature (158) of the strut clip (100) and the strut (200).

10. A method of attaching a clip (100) to strut to secure a tray, the method including:
providing a strut clip (100) that includes a clip body (104) and a fastener (184), the clip body (104) including:
a first plate (140), the first plate (140) including a first aperture (150) and an engagement feature (158);
a second plate (110), the second plate (110) including a second aperture (114) and opposed fingers (126a, 126b) that extend from the second plate (110) toward the first plate (140); and
an arm (172) connected to and extending between the first plate (140) and second plate (110); and
the fastener (184) being secured through the first aperture (150) and the second aperture (114);
aligning the opposed fingers (126a, 126b) of the clip (100) with lip channels (218A) of the strut;
aligning the tray between the engagement feature (158) of the clip (100) and the strut; and
adjusting the fastener (184) to decrease a distance between the first and second plates (140, 110) by deforming the arm (172), and thereby moving the clip body (104) from an installation orientation, with the arm (172) in an undeformed orientation, to an installed orientation, with the arm (172) in a deformed orientation, to capture the tray between the engagement feature (158) and the strut, with the arm (172) extending through a top opening (224) of the strut and the opposed fingers (126a, 126b) secured within the lip channels (218A) of the strut.

11. The method of claim 10, wherein adjusting the fastener (184) to deform the arm (172), to decrease the distance between the first and second plates (140, 110), includes deforming the arm (172) outwardly away from a space between the first and second plates (140, 110).

12. The method of claim 10 or claim 11, wherein the opposed fingers (126a, 126b) include a first opposed finger (126a) and a second opposed finger (126b);
wherein the strut clip (100) defines a reference axis (112) that extends in parallel with an elongate direction of the strut in the installed orientation, the first opposed finger (126a) extends laterally in a first direction relative to the reference axis (112), the second opposed finger (126b) extends laterally in a second direction relative to the reference axis (112), and the first opposed finger (126a) is offset from the second opposed finger (126b) along the reference axis (112); and
wherein aligning the opposed fingers (126a, 126b) with the lip channels (218A) includes inserting the opposed fingers (126a, 126b) through the top opening (224) of the strut.

13. The method of any one of claims 10 to 12, wherein the fastener (184) is rotated to deform the arm (172), and optionally wherein the fastener (184) is threadedly engaged with the second plate (110).

14. The method of claim 13, wherein the clip body (104) integrally includes the first plate (140), the second plate (110), and the arm (172), and optionally wherein the second plate (110) integrally includes a threaded profile (138) that engages the fastener (184).

15. The method of any one of claims 10 to 14, wherein the engagement feature (158) includes an engagement tab (460) that extends away from the second plate (110), and optionally wherein the engagement tab (460) permits the tray to translate relative to the strut clip (100).
